(19) **Europäisches Patentamt / European Patent Office / Office européen des brevets**

(11) **EP 3 975 123 A1**

(12) # EUROPEAN PATENT APPLICATION
published in accordance with Art. 153(4) EPC

(43) Date of publication:
**30.03.2022 Bulletin 2022/13**

(21) Application number: **20880439.3**

(22) Date of filing: **28.10.2020**

(51) Int Cl.:
**G06T 7/73** (2017.01)

(86) International application number:
**PCT/CN2020/124547**

(87) International publication number:
**WO 2021/083242 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2019 CN 201911056898**

(71) Applicant: **GUANGDONG OPPO MOBILE TELECOMMUNICATIONS CORP., LTD.**
**Wusha, Chang'an**
**Dongguan**
**Guangdong 523860 (CN)**

(72) Inventors:
- **SUN, Yingying**
  **Dongguan, Guangdong 523860 (CN)**
- **JIN, Ke**
  **Dongguan, Guangdong 523860 (CN)**
- **SHANG, Taizhang**
  **Dongguan, Guangdong 523860 (CN)**

(74) Representative: **Rossi, Ugo**
**Bugnion S.p.A.**
**Viale Lancetti, 17**
**20158 Milano (MI) (IT)**

(54) **MAP CONSTRUCTING METHOD, POSITIONING METHOD AND SYSTEM, WIRELESS COMMUNICATION TERMINAL, AND COMPUTER-READABLE MEDIUM**

(57) Disclosed in the embodiments of the present application are a map constructing method, a positioning method and system, a wireless communication terminal, and a computer-readable medium. The map constructing method comprises : collecting an environment image of the current environment; obtaining the image feature information of the environment image, and according to the image feature information, performing feature point matching on continuous environment images so as to select a key frame image, wherein the image feature information comprises feature point information and corresponding describer information; obtaining depth information corresponding to a matched feature point in the key frame image so as to construct the three-dimensional feature information of the key frame image; and based on the key frame image, constructing the map data of the current environment, wherein the map data comprises the image feature information and the three-dimensional feature information corresponding to the key frame image. The map constructing method and the positioning method provided by the present application have the advantages of being high in positioning accuracy and strong in robustness, and being applicable for various complex scenes.

FIG. 1

**Description**

This application claims priority to a CN application No. 201911056898.3 filed on October 31, 2019, titled "MAP CONSTRUCTING METHOD AND APPARATUS, AND POSITIONING METHOD AND APPARAUTS". The contents of the aforementioned application are incorporated herein by reference.

TECHNICAL FIELD

Embodiments of the disclosure relates to the field of map constructing and positioning technologies, and more particularly, to a map constructing method, a positioning method, a positioning system, a wireless communication terminal, and a computer-readable medium.

BACKGROUND

With constantly developing of computer technology, positioning and navigation techniques have been widely used in different fields and various scenarios, such as positioning and navigation for indoor environments or outdoor environments. In the related art, visual information can be used to construct environment maps, thereby assisting users to perceive the surrounding environment and locating themselves quickly.

In the related art, there is a certain deficiency in map constructing and positioning processes. For example, the related art only considers traditional image features in processes of environment mapping and image matching. The traditional image features are not robust to noise, which results in a low success rate of positioning. In addition, a precise positioning cannot be realized, in a condition that the environment is changed due to factors such as brightness change of environment light or season variation during the positioning process. Furthermore, only two-dimensional features of visual images are generally considered in the related art, which leads to a limitation in degree of freedom of positioning. Moreover, there also exists a problem of lacking robustness of positioning.

SUMMARY

In view of the above, the embodiments of the disclosure provide a map constructing method, a positioning method and a system, a wireless communication terminal, and a computer-readable medium, which can perform map constructing and positioning based on image features of acquired environment images.

According to a first aspect, a map constructing method is provided. A series of environment images of a current environment are acquired. First image feature information of the environment images is obtained, and a feature point matching is performed on the successive environment images to select keyframe images, based on the first image feature information. The first image feature information includes feature point information and descriptor information. Depth information of matched feature points in the keyframe images is acquired, thereby constructing three-dimensional feature information of the keyframe images. Map data of the current environment is constructed based on the keyframe images, where the map data includes the first image feature information and the three-dimensional feature information of the keyframe images.

According to a second aspect, a positioning method is provided. A target image is acquired, in response to a positioning command. Image feature information of the target image is extracted, where the image feature information includes feature point information of the target image and descriptor information of the target image. The target image is matched with each of keyframe images in map data to determine a matched frame image, according to the image feature information. A current positioning result corresponding to the target image is generated, according to the matched frame image.

According to a third aspect, a positioning system is provided. The positioning system includes a positioning command responding module, an image feature identifying module, a matching frame selecting module and a positioning result generating module. The positioning command responding module is configured to acquire a target image, in response to a positioning command. The image feature identifying module is configured to extract image feature information of the target image; where the image feature information includes feature point information of the target image and descriptor information of the target image. The matching frame selecting module is configured to match the target image with each of keyframe images in map data to determine a matched frame image, according to the image feature information. The positioning result generating module is configured to generate a current positioning result corresponding to the target image, according to the matched frame image.

According to a fourth aspect, a computer readable storage medium is provided. The computer readable storage medium is configured to store computer software instructions for performing the methods according to the above first aspect or second aspect, where the computer readable storage medium includes programs designed to execute the above aspects.

According to a fifth aspect, a wireless communication terminal is provided. The wireless communication terminal includes one or more processors and a storage device. The storage device is configured to store one or more programs, which, when being executed by the one or more processors, cause the one or more processors to implement the methods according to the above first aspect or the second aspect.

In the disclosure, names of the wireless communication terminal and the localizing system, and the like constitute no limitation to devices. In actual implementation, these devices may appear with other names. As long as functions of the devices are similar to those in the disclosure, the devices fall within the scope of the claims in this disclosure and equivalent technologies thereof.

These aspects or other aspects of the disclosure will become more clearly and apparently in descriptions of the following embodiments.

BRIEF DESCRIPTION OF THE DRAWINGS

FIG. 1 is a schematic diagram of a map constructing method according to an embodiment of the disclosure;
FIG. 2 is a flowchart of another map constructing method according to an embodiment of the disclosure;
FIG. 3 is a flowchart of a positioning method according to an embodiment of the disclosure;
FIG. 4 is a flowchart of another positioning method according to an embodiment of the disclosure;
FIG. 5 is a schematic diagram illustrating a matching result of a keyframe image according to an embodiment of the disclosure;
FIG. 6 is a schematic diagram illustrating a principle of a PnP model solution according to an embodiment of the disclosure;
FIG. 7 is a block diagram of a positioning system according to an embodiment of the disclosure;
FIG. 8 is a block diagram of a map constructing apparatus according to an embodiment of the disclosure; and
FIG. 9 is a block diagram of a computer system for a wireless communication terminal according to an embodiment of the disclosure.

DETAILED DESCRIPTION OF THE EMBODIMENTS

The technical solutions in the embodiments of the disclosure will be clearly and completely described below in conjunction with the drawings in the embodiments of the disclosure.

In the related art, current solutions only consider traditional image features when constructing an environment map by acquiring visual images. The traditional image features are not robust to noise, which results in a low success rate of positioning. In addition, the positioning may be failed in a condition that the image features are changed due to factors such as brightness change of environment light or season variation. Furthermore, only two-dimensional features of the visual image are generally considered in the related art, which leads to the limitation in the degree of freedom of positioning and the lacking of the robustness of positioning. Therefore, a method is needed to addresses the above-mentioned disadvantages and shortcomings of the relate art.

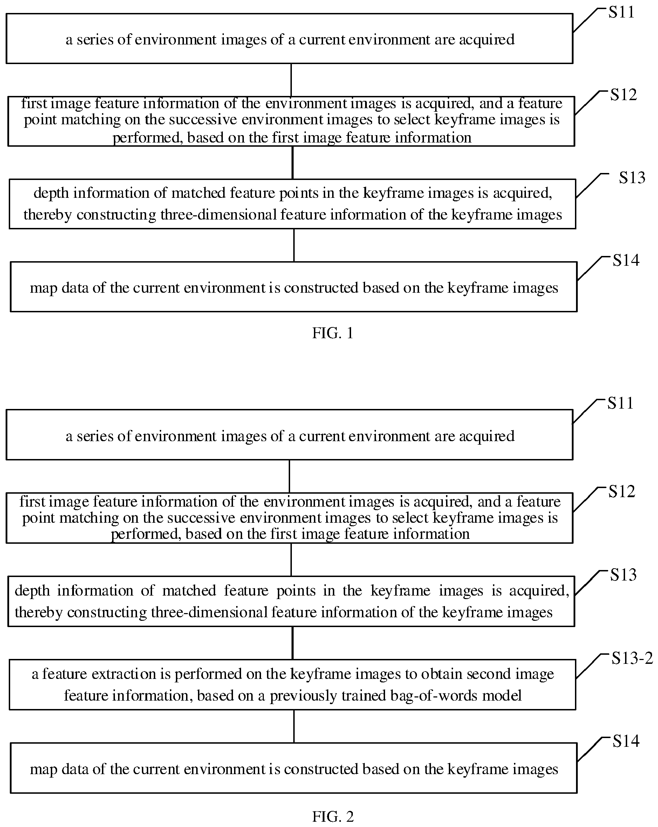

FIG. 1 is a schematic diagram of a map constructing method, according to an embodiment of the disclosure. As illustrated in FIG.1, the method includes partial or all of the blocks S11, S12, S13 and S14.

S11, a series of environment images of a current environment are acquired.

S12, first image feature information of the environment images is obtained, and a feature point matching on the successive environment images to select keyframe images is performed, based on the first image feature information; where the first image feature information includes feature point information and descriptor information.

S13, depth information of matched feature points in the keyframe images is acquired, thereby constructing three-dimensional feature information of the keyframe images.

S14, map data of the current environment is constructed based on the keyframe images. The map data includes the first image feature information and the three-dimensional feature information of the keyframe images.

Specifically, a monocular camera can be used to capture the series of environmental images sequentially at a certain frequency, in the process of constructing map for an indoor environment or an outdoor environment. The acquired environment images may be in RGB format. For example, the monocular camera may be controlled to capture the series of environmental images at the frequency of 10-20 frames per second and move at a certain speed in the current environment, thereby capturing all the environment images of the current environment.

According to an embodiment of the disclosure, after the environment images are acquired, a feature extraction is performed in real time on the environment images, by using a trained feature extraction model based on SuperPoint, thereby obtaining the first image feature information of each of the environment images. The first image feature information includes the feature point information and the descriptor information.

Specifically, an operation of obtaining the first image feature information of the environment images by using the trained feature extraction model based on SuperPoint may include the operations S1211, S1212 and S1213.

S1211, the environment images are encoded by an encoder to obtain encoded features.

S1212, the encoded features are input into an interest point encoder to obtain the feature point information of the environment images.

S1213, the encoded features are input into a descriptor encoder to obtain the descriptor information of the environment images.

Specifically, the feature extraction model based on SuperPoint may include an encoding module and a decoding module. An input image for the encoding module may be a full-sized image. The encoding module reduces the dimensionality of the input image by using an encoder, thereby obtaining a feature map after dimension reduction, i.e., the encoded features. The decoding module may include the interest point encoder and the descriptor encoder. The encoded features are decoded by the interest point encoder, thereby outputting the feature point information with the same size as the environment image. The encoded features are decoded by the descriptor encoder, thereby outputting the descriptor information corresponding to the feature point information. The descriptor information is configured to describe image characteristics of corresponding feature points, such as color, contour, and other information.

According to an embodiment of the disclosure, the feature extraction model based on SuperPoint is obtained by previously training. The training process may include operations S21, S22 and S23.

S21, a synthetic database is constructed, and a feature point extraction model is trained by using the synthetic database.

S22, a random homographic transformation is performed on original images in a MS-COCO dataset to obtain warped images each corresponding to the original images respectively, and a feature extraction is performed on the warped images by a trained MagicPoint model, thereby acquiring feature point ground truth labels of each of the original images.

S23, the original images in the MS-COCO dataset and the feature point ground truth labels of each of the original images are taken as training data, and a SuperPoint model is trained to obtain the feature extraction model based on SuperPoint.

Specifically, the synthetic database consisting of various synthetic shapes is constructed. The synthetic shapes may include simple two-dimensional shapes, such as quadrilaterals, triangles, lines, ellipses, and the like. Positions of key points in each two-dimensional shape are defined as positions of Y-junctions, L-junctions, T-junctions, centers of ellipses and end points of line segments of the two-dimensional shape. Such key points may be taken as a subset of interest points found in the real world. The synthetic database is taken as training data for training the MagicPoint model. The MagicPoint model is configured to extract feature points of basic geometric shapes.

Specifically, n kinds of random homographic transformations are performed on each of the original images in the Microsoft -Common Objects in Context (MS-COCO) dataset, thereby obtaining n warped images each corresponding to the original images. The above-mentioned homographic transformation can be calculated by a transformation matrix reflecting a mapping relationship between two images, and points with the same color in the two images are termed as corresponding points. Each of the original images in the MS-COCO dataset is taken as an input image, and a random transformation matrix is applied to the input image to obtain the warped images. For example, the random homographic transformation may be a transformation composed by several simple transformations.

The feature extraction is performed on the warped images by the trained MagicPoint model, thereby obtaining n kinds of feature point heatmaps of each of the original images. Combined with a feature point heatmap of the original image, the n kinds of feature point heatmaps of the same original image are aggregated to obtain a final feature point aggregated map. A predetermined threshold value is set to filter out the feature points at various positions in the feature point aggregated map, thereby selecting feature points with stronger variations. The selected feature points are configured to describe the shape in the original image. The selected feature points are determined as feature point ground truth labels for subsequently training the SuperPoint model.

Specifically, input parameters of the SuperPoint model may be the full-sized images, a feature reduction is performed on the input image by the encoder, and feature point information and descriptor information are outputted by using two decoders. For example, the encoder may adopt a Visual Geometry Group (VGG)-style architecture, which performs sequential pooling operations on the input image by using three sequential max-pooling layers and performs a convolution operation by using a convolution layer, thereby transforming the input image sized H * W to a feature map sized (H/8) * (W/8). The decoding module may include two modules, i.e., the interest point decoder and the descriptor decoder. The interest point decoder is configured to extract the two-dimensional feature map information, and the descriptor decoder is configured to extract the descriptor information. The interest point decoder decodes the encoded feature map, and finally reshapes the depth of the output feature map to the same size as the original input image by increasing the depth. The encoded feature map is decoded by the descriptor decoder, and then a bicubic interpolation and a L2 normalization are performed, thereby obtaining the final descriptor information.

The original images in the MS-COCO dataset and the feature point ground truth labels of each of the original images are taken as training data. Then the SuperPoint model is trained by using the above method.

According to an embodiment of the disclosure, the performing, based on the first image feature information, the feature point matching on the successive environment images to select the keyframe images may include operations S1221, S1222, S1223 and S1224.

S1221, the first frame of the environment images is taken as a current keyframe image, and one or more frames from the environment images which are successive to the current keyframe image are selected as one or more environment images waiting to be matched.

S1222, the feature point matching is performed between the current keyframe image and the one or more environment images waiting to be matched, by using the descriptor information; and the environment image waiting to be matched whose matching result is greater than a predetermined threshold value is selected as the keyframe image.

S1223, the current keyframe image is updated with the selected keyframe image, and one or more frames from the environment images which are successive to the updated current keyframe image are selected as one or more environment images waiting to be matched nextly.

S1224, the feature point matching is performed between the updated current keyframe image and the one or more environment images waiting to be matched nextly by using the descriptor information, thereby successively selecting the keyframe images.

Specifically, in the process of selecting keyframe images from the environment images, the current keyframe image may be initialized by the first frame of the environment images. The first frame of the environment images is captured by the monocular camera and is taken as a start for selecting the sequentially captured environment images. Since the environmental images are acquired sequentially at the predetermined frequency, a difference between two or more successive environmental images may not be significant. Therefore, the one or more environment images successive to the current key frame image are selected as the environment image waiting to be matched in the process of selecting keyframe images, where an amount of the selected environment images may be one, or two, or three, or five.

Specifically, when performing the feature point matching between the current keyframe image and the environment image waiting to be matched, one descriptor in the descriptor information of the current keyframe image is selected, and then a Euclidean distance between the determined descriptor and each of descriptors in the descriptor information of the environment images waiting to be matched is calculated respectively. The descriptor of the environment image with the smallest Euclidean distance is determined as a matched descriptor corresponding to the selected descriptor of the current keyframe image, thereby determining the matched feature points in the environment images waiting to be matched and the current keyframe image, and establishing feature point pairs. Each of the descriptors of the current keyframe image are traversed, thereby obtaining matching result of the feature points in the current keyframe image.

In an implementation, the feature point matching is performed with a fixed number of feature points, which are selected from the current keyframe image. For example, an amount of the selected feature points may be 150, 180 or 200. Such operation avoids a tracking failure caused by too few selected feature points, or an influence on computational efficiency caused by too many selected feature points. In another implementation, a predetermined number of feature points are selected according to an object contained in the current keyframe image. For example, feature points of the object with distinguish color or shape are selected.

In addition, after obtaining the matching result between the current keyframe image and the one or more environment images waiting to be matched, the matching result may be filtered by a k-Nearest Neighbor (KNN) model, thereby removing the incorrect matching therefrom.

When the matching result is larger than a predetermined threshold, the environment image waiting to be matched is judged as successfully tracking the current keyframe image, and the environment image waiting to be matched is taken as a keyframe image. For example, in a condition that an accuracy rate of the matching result is greater than 70% or 75%, the tracking is judged as successful and the current keyframe image is updated with the environment image waiting to be matched.

Specifically, after the first current keyframe image is successfully tracked, the selected keyframe image can be taken as a second current keyframe image, and one or more environment images waiting to be matched corresponding to the second current keyframe image are selected, thereby successively judging and selecting the keyframe images.

Furthermore, three-dimensional feature information of the keyframe images may be constructed at the above S13 according to an embodiment of the disclosure, which may specifically include operations S131 and S132.

S131, matched feature point pairs are established, by using the matched feature points in the current keyframe image and the keyframe image matched with the current keyframe image.

S132, the depth information of the matched feature points in the matched feature point pairs is calculated, thereby constructing the three-dimensional feature information of the keyframe images by using the depth information of the feature points and the feature point information.

Specifically, when performing the feature point matching, the matched feature point pairs are established by using the matched feature points in two adjacent and matched keyframe images. A motion estimation is performed by using the matched feature point pairs. The depth information of the feature points corresponding to the matched feature point pairs is calculated according to triangulation.

As an alternative embodiment according to the disclosure, a feature extraction is performed on the keyframe images to obtain second image feature information, based on a trained bag-of-words model. As illustrated in FIG. 2, the above-mentioned method may further include a block S13-2.

S13-2, a feature extraction is performed on the keyframe images to obtain second image feature information, based on a trained bag-of-words model.

Specifically, the bag-of-words model can be trained. The feature extraction is performed on the keyframe images in a training process of the bag-of-words model. For example, the number of types of extracted feature is w, each type can be referred to as a word; and the trained model may include w words.

When extracting feature information of the bag-of-words model for a keyframe, the keyframe is scored by each of the words, and a score value is a floating-point number from 0 to 1. In this way, each keyframe can be represented by a w-dimensional float-vector, and this w-dimensional vector is a feature vector of the bag-of-words model. A scoring equation can include the following:

$$v_t^i = tf(i, I_t) \cdot idf(i);$$

$$idf(i) = log\frac{N}{n_i}, tf(i, I_t) = \frac{n_{iI_t}}{n_{I_t}};$$

where N represents the number of the training images, $n_i$ represents the number of times that a word $w_i$ appears, $I_t$ represents an image $I$ captured at time t, $n_{iI_t}$ represents the total number of the words appearing in the image $I_t$. By scoring the words, feature information of the bag-of-words model of each keyframe is the w-dimensional float-vector.

Specifically, a process of training the above bag-of-words model may generally include the following operations: detecting feature on the training images, i.e., extracting visual words from various kinds of the training images, and clustering all of the visual words together; representing the features, i.e., constructing a word table via K-Means algorithm; generating a dictionary, i.e., representing the image by words in the dictionary. The training process of a visual bag-of-words model can be realized via conventional method, which will not be repeated herein.

Specifically, at S14 according the above method, map data in offline form is generated by serializing and locally storing the keyframe images, the feature point information of the keyframe images, the descriptor information of the keyframe images, and the three-dimensional feature information of the keyframe images, after extracting the second feature information of each key frame image.

Furthermore, the second image feature information of keyframe images can be further stored.

Therefore, the map constructing method according to the embodiments selects the keyframe images by using feature point information and descriptor information of the environment information, and constructs the map data based on the first image feature information, the three-based on the feature point information, the descriptor information and the second image feature information extracted based on the bag-of-words model. Image features based on deep learning are used in the method, and the constructed map data has an advantage of strong noise immunity. In addition, the map data is constructed by using various shape features and can still be effective in various scenes, such as the scenes where the environment are changed, or the light brightness are changed, which significantly improves the positioning precision and the robustness of positioning. Furthermore, the three-dimensional feature information of various feature points in the keyframe images are stored when constructing the map data. In this case, the two-dimensional and three-dimensional information of the visual keyframes are considered simultaneously, both position and pose information are provided when positioning, and the degree of freedom of positioning is improved compared with other indoor positioning methods.

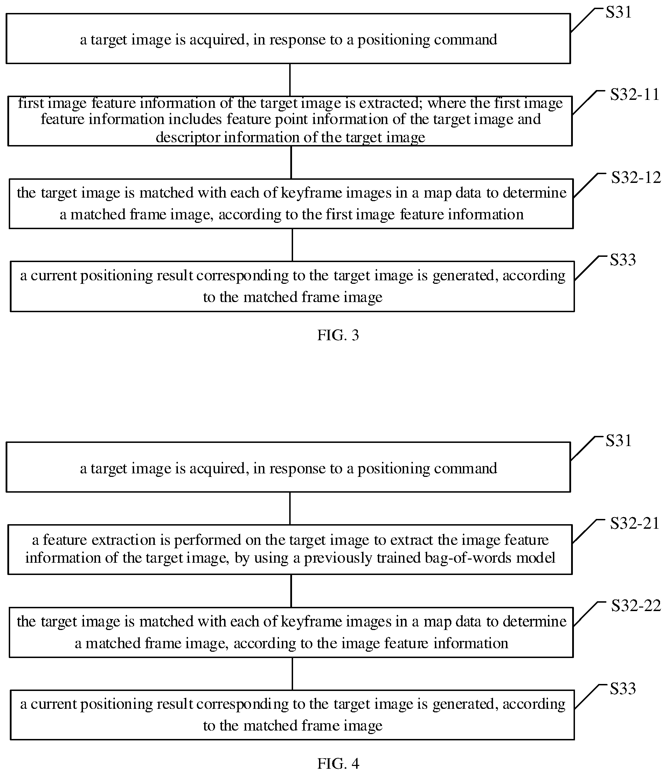

FIG. 3 is a schematic diagram of a positioning method according to an embodiment of the disclosure. As illustrated in FIG. 3, the method includes partial or all of the blocks S31, S32-11, S32-12 and S33.

S31, a target image is acquired, in response to a positioning command.

S32-11, image feature information of the target image is extracted; where the image feature information includes feature point information of the target image and descriptor information of the target image.

S32-12, the target image is matched with each of keyframe images in map data to determine a matched frame image, according to the image feature information.

S33, a current positioning result corresponding to the target image is generated, according to the matched frame image.

Specifically, a monocular camera carried by the terminal device can be activated to capture a current target image in RGB format, when positioning a user. An offline map constructed previously is simultaneously loaded on the terminal device. For example, the offline map is constructed according to the above embodiments of the disclosure.

Optionally, the image feature information of the target image is extracted by using a trained feature extraction model based on SuperPoint, which may specifically include operations S41, S42 and S43, according to an embodiment of the disclosure.

S41, the target image is encoded by an encoder to obtain encoded feature.

S42, the encoded feature is inputted into an interest point encoder to obtain the feature point information of the target image.

S43, the encoded feature is inputted into a descriptor encoder to obtain the descriptor information of the target image.

Specifically, after the feature point information and descriptor information of the target image are extracted, a feature point matching is performed between the target image and the keyframe images in the map data by using the descriptor information. When the matching result is greater than a predetermined threshold value, the matching is judged to be successful and the corresponding keyframe image is considered as the matched frame image.

Optionally, according to an embodiment of the disclosure, pose information of the terminal device can be determined after matched frame image of the current target image is determined, and a current positioning result can be generated according to the pose information and other feature information.

Specifically, the operation of determining the pose of the terminal device may include the following operations S61 and S62.

S61, a feature point matching is performed between the target image and the matched frame image, based on the image feature information, thereby obtaining target matched feature points.

S62, three-dimensional feature information of the matched frame image and the target matched feature points are inputted into a trained PnP model, thereby obtaining pose information of the target image.

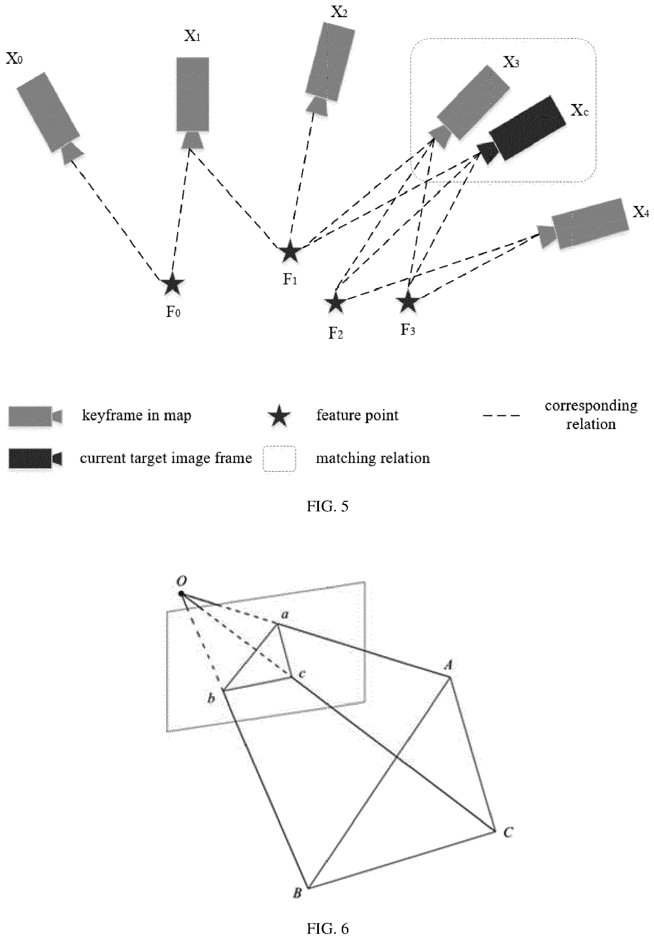

According to a specific scene illustrated in FIG. 5, after the feature point information and the descriptor information are extracted from the target image according to the above operations, Euclidean distances between descriptors can be calculated, by determining the N-th feature point $F_{CN}$ in a current target image frame Xc and traversing all feature points in the matched frame image $X_3$. The smallest Euclidean distance is compared with a first predetermined threshold value; a matched feature point pair is generated when the Euclidean distance is larger than the first predetermined threshold value; and it fails to generate a matched feature point pair, when the Euclidean distance is less than or equal to the first predetermined threshold value. Then updating N=N+1, and traversing all feature points in the current target image frame Xc, thereby obtaining a matched pair sequence {Fl, F2, F3}, and the matched pair sequence is taken as the target matched feature points.

Specifically, after the matched pair sequence {F1, F2, F3} is obtained, the pose information of the matched frame image $X_3$ is taken as the pose information of the target image, when the number of elements in the matched pair sequence is less than a second predetermined threshold value.

Furthermore, the pose information of the target image is calculated by using a pose estimation model, when the number of elements in the matched pair sequence is larger than the predetermined threshold value. For example, a current pose of the target image Xc in a map coordinate system is solved by a function of Solve PnP in OpenCV, and the function is called by a Perspective-n-Point (PnP) model.

Specifically, input parameters of the PnP model are three-dimensional feature points in the matched frame image (i.e., feature points in the keyframe image in the map coordinate system) and target matched feature points (i.e., feature points in the current target image frame), which are obtained by projecting the three-dimensional feature points into the current target image frame. Output of the PnP model is the pose transformation of the target image of the current frame with respect to the origin of the map coordinate system (i.e., the pose of the target image of the current frame in the map coordinate system).

For example, a calculation principle of the PnP model can include the following content. Referring to FIG. 6, the center of the current coordinate system is set as a point o, A, B and C represent three three-dimensional feature points. According to the cosine theorem, the following equations are obtained:

$$OA^2 + OB^2 - 2 \cdot OA \cdot OB \cdot cos < a, b >= AB^2$$

$$OA^2 + OC^2 - 2 \cdot OA \cdot OC \cdot cos < a, c >= AC^2$$

$$OB^2 + OC^2 - 2 \cdot OB \cdot OC \cdot cos < b, c >= BC^2$$

By eliminating the above equations by dividing $OC^2$, and substituting $x = \frac{OA}{OC}$, $y = \frac{OB}{OC}$ into the above equations, the following equations are obtained:

$$x^2 + y^2 - 2 \cdot x \cdot y \cdot cos < a, b >= \frac{AB^2}{OC^2}$$

$$x^2 + 1 - 2 \cdot x \cdot cos < a, c >= \frac{AC^2}{OC^2}$$

$$y^2 + 1 - 2 \cdot y \cdot cos < b, c >= \frac{BC^2}{OC^2}$$

By substituting $u = \frac{AB^2}{OC^2}$, $v = \frac{BC^2}{AB^2}$, $w = \frac{AC^2}{AB^2}$ into the above equations, the following equations are obtained:

$$x^2 + y^2 - 2 \cdot x \cdot y \cdot cos < a, b >= u^2$$

$$x^2 + 1 - 2 \cdot x \cdot cos < a, c >= wu$$

$$y^2 + 1 - 2 \cdot y \cdot cos < b, c >= vu$$

By solving the above three equations, the following equations are obtained:

$$(1 - w)x^2 - w \cdot y^2 - 2 \cdot x \cdot cos < a, c > +2 \cdot w \cdot x \cdot y \cdot cos < a, b > +1 = 0$$

$$(1 - v)y^2 - v \cdot x^2 - 2 \cdot y \cdot cos < b, c > +2 \cdot v \cdot x \cdot y \cdot cos < a, b > +1 = 0$$

where, $w$, $v$, $cos < a, c >$, $cos < b, c >$, $cos < a, b >$ are known quantities, and $x$, $y$ are unknown quantities. Values of $x$ and $y$ can be solved by the above two equations, and then values of OA, OB and OC can be subsequently solved according to the following equation:

$$x^2 + y^2 - 2 \cdot x \cdot y \cdot cos < a, b >= \frac{AB^2}{OC^2}, x = \frac{OA}{OC}, y = \frac{OB}{OC}$$

Finally, the coordinates of the three feature points in the current coordinate system are solved according to the vector equation.

After obtaining the coordinates of the feature points A, B and C in the current coordinate system, a camera pose can be solved by transforming the map coordinate system to the current coordinate system.

Three-dimensional coordinates of the feature points in the current coordinate system which the target image locates in are solved according to the above way, and the camera pose is solved according to the three-dimensional coordinates of the matched frame image in the map coordinate system in the map data and the three-dimensional coordinates of the feature points in the current coordinate system.

As an alternative embodiment according to the disclosure, a feature extraction is performed on the target image by using a bag-of-words model. Specifically, performing the feature extraction may include the blocks S31, S32-21, S32-22, and S33, as illustrated in FIG. 4.

S31, a target image is acquired, in response to a positioning command.

S32-21, a feature extraction is performed on the target image to extract the image feature information of the target image, by using a trained bag-of-words model.

S32-22, the target image is matched with each of keyframe images in map data to determine a matched frame image, according to the image feature information.

S33, a current positioning result corresponding to the target image is generated, according to the matched frame image.

Optionally, the second image feature information of each of the keyframe images are stored in the map data, where the second image feature information is extracted by using the bag-of-words model, according to an embodiment of the disclosure. Therefore, the image feature information of the target image is extracted by using the same bag-of-words model, and the target image is matched with each of the key frame images according to the image feature information. Specifically, an operation of matching the target image may include operations S51, S52, S53, S54 and S55.

S51, a similarity between the target image and each of the keyframe images in the map data is calculated, based on the image feature information. The keyframe images whose similarities being larger than a first threshold value are selected, thereby obtaining a to-be-matched frame set.

S52, the keyframe images in the to-be-matched frame set are grouped to obtain at least one image group, according to timestamp information and the similarities of the keyframe images in the to-be-matched frame set.

S53, a matching degree between the target image and the at least one image group is calculated, and the image group with the largest matching degree is determined as a to-be-matched image group.

S54, the keyframe image with the largest similarity in the to-be-matched image group are selected as a to-be-matched image, and the similarity of the to-be-matched image is compared with a second threshold value.

S55, the to-be-matched image is determined as the matched frame image of the target image, in response to the similarity of the to-be-matched image being larger than the second threshold value; or the matching is determined as failed in response to the similarity of the to-be-matched image being less than the second threshold value.

Specifically, the similarity between the current target image and each keyframe in the map data is queried according to the image feature information, and the keyframe images whose similarities is larger than the first threshold value are selected as the to-be-matched frame set. A similarity calculation equation may include:

$$s(v_1, v_2) = 1 - \frac{1}{2} \left| \frac{v_1}{|v_1|} - \frac{v_2}{|v_2|} \right|$$

where $v_1$ represents an image feature vector of the target image provided by the bag-of-words model; $v_2$ represents a feature vector of a certain keyframe image in the map data provided by the bag-of-words model.

Specifically, after the to-be-matched frame set are selected, the keyframe images may be grouped according to the timestamp of each key frame image and the similarity calculated by the above operations. In an implementation, the timestamp may be within a range of a fixed threshold of TH1, for example, a time difference between the first keyframe image and the last keyframe image in a same group is within 1.5 seconds.

In another implementation, a ratio the similarity of the first keyframe image and the last keyframe image in a same image group may be within a range of a threshold of TH2, for example, 60 -70%. The calculation equation may include:

$$\eta(v_t, v_{t_j}) = \frac{s(v_t, v_{t_j})}{s(v_t, v_{t-\Delta t})}$$

where, $s(v_t, v_{t_j})$ represents the similarity between the target image and the first keyframe image in the image group; $s(v_t, v_{t-\Delta t})$ represents the similarity between the target image and the last keyframe image in the image group; and $\Delta t$ represents TH$_1$ and $\eta$ is required to be less than TH$_2$.

Specifically, after the at least one image group is determined, the matching degree between the target image and each of the image group are calculated, and the image group with the largest matching degree is reserved. An equation for calculating the matching degree may include:

$$H(v_t, v_{t_i}) = \sum_{j=n_t}^{m_t} \eta(v_t, v_{t_j})$$

where $v_t$ represents the image feature vector of the target image acquired by the bag-of-words mode, and $v_{t_j}$ represents the image feature vector of one of the keyframe images in the image group, which is acquired by the bag-of-words mode.

Specifically, after the matching degree between the target image and the at least one image group is calculated, the image group with the largest matching degree is selected as a to-be-matched image group. The keyframe image, whose similarity calculated in the previous step in the to-be-matched image group is the largest, is selected as a to-be-matched image.

The similarity of the to-be-matched image is compared with a predetermined threshold of $TH_3$. The matching is determined as being successful and the matched frame image is output, in response to the similarity is larger than the threshold of $TH_3$; otherwise, the matching is determined as failed.

A speed of matching the target image with the keyframe images in the map data can be effectively improved, by performing the matching according to the image feature information extracted from the bag-of-words model.

Therefore, the positioning method according to embodiments of the disclosure adopts the bag-of-words model for image matching, and then the current position and pose of itself are accurately calculated by the PnP model, which are combined to form a low-cost, high-precision and strong robust environment perception method that is applicable to various complex scenes and meets productization requirements. Moreover, both of the two-dimensional information and three-dimensional information of the visual keyframes are considered in the positioning process. The positioning result provides both position information and attitude information, which improves the degree of freedom of positioning compared with other indoor positioning methods. The positioning method can be directly implemented on the mobile terminal device, and the positioning process does not require introducing other external base station devices, thus the cost of positioning is low. In addition, there is no need to introduce algorithms with high error rate such as object recognition in the positioning process, the positioning has a high success rate and strong robust.

It should be understood that the terms "system" and "network" are often used interchangeably herein. The term "and/ or" herein indicates only an association relationship for describing associated objects and indicates that three relationships may exist. For example, A and/or B may indicate the following three cases: Only A exists, both A and B exist, and only B exists, where A and B may be singular or plural. In addition, the character "/" herein generally indicates that associated objects before and after the same are in an "or" relationship.

It should also be understood that, in the various embodiments of the disclosure, the sequence number of the above-mentioned processes does not mean the order of execution, the execution order of each process should be determined by its function and internal logic, and should not constitute any limitation to the implementation of the embodiments of the disclosure.

In addition, the above-mentioned drawings are merely schematic illustrations of the processing included in the method according to the exemplary embodiments of the disclosure, and are not intended for limitation. It can be readily understood that the processes illustrated in the above drawings do not indicate or limit the time sequence of these processes. In addition, it can be readily understood that these processes may be executed synchronously or asynchronously in multiple modules.

The positioning methods according to the embodiments of the disclosure are described specifically in the above, a positioning system according to the embodiments of the disclosure will be described below with reference to drawings. The technical features described in the method embodiments are applicable to the following system embodiments.

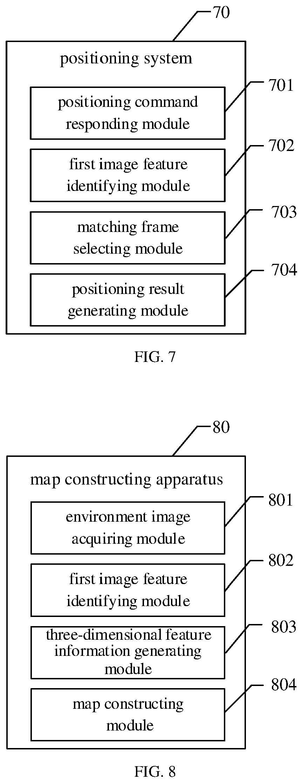

FIG. 7 illustrates a schematic block diagram of a positioning system 70 according to an embodiment of the disclosure. As illustrated in FIG. 7, the positioning system 70 includes a positioning command responding module 701, an image feature identifying module 702, a matching frame selecting module 703, and a positioning result generating module 704.

The positioning command responding module 701 is configured to acquire a target image, in response to a positioning command.

The image feature identifying module 702 is configured to extract image feature information of the target image; where the image feature information includes feature point information of the target image and descriptor information of the target image.

The matching frame selecting module 703 is configured to match the target image with each of keyframe images in map data to determine a matched frame image, according to the image feature information.

The positioning result generating module 704 is configured to generate a current positioning result corresponding to the target image, according to the matched frame image.

Optionally, the positioning system 70 further include, an image feature information matching module, according to an embodiment of the disclosure.

The image feature information matching module is configured to perform, by using a trained bag-of-words model, a feature extraction on the target image to extract the image feature information of the target image; and match the target image with each of the keyframe images in the map data to determine the matched frame image, according to the image feature information.

Optionally, the image feature information matching module may include a to-be-matched frame set selecting unit, an image group selecting unit, a to-be-matched image group selecting unit, a similarity comparing unit and a matched keyframe image judging unit.

The to-be-matched frame set selecting unit is configured to calculate, based on the image feature information, a similarity between the target image and each of the keyframe images in the map data, and select the keyframe images whose similarities larger than a first threshold value, thereby obtaining a to-be-matched frame set.

The image group selecting unit is configured to group the keyframe images in the to-be-matched frame set to obtain at least one image group, according to timestamp information and the similarities of the keyframe images in the to-be-matched frame set.

The to-be-matched image group selecting unit is configured to calculate a matching degree between the target image and the at least one image group, and determining the image group with the largest matching degree as a to-be-matched image group.

The matched keyframe image judging unit is configured to select the keyframe image with the largest similarity in the to-be-matched image group as a to-be-matched image, and comparing the similarity of the to-be-matched image with a second threshold value; and determine the to-be-matched image as the matched frame image of the target image, in response to the similarity of the to-be-matched image being larger than the second threshold value; or determine the matching fails in response to the similarity of the to-be-matched image being less than the second threshold value.

Optionally, the positioning system 70 further include a pose information acquiring module, according to an embodiment of the disclosure.

The pose information acquiring module is configured to perform a feature point matching between the target image and the matched frame image based on the image feature information, thereby obtaining target matched feature points; and input three-dimensional feature information of the matched frame image and the target matched feature points into a trained PnP model, thereby obtaining pose information of the target image.

Optionally, the image feature identifying module 802 may be configured to obtain the image feature information of environment images by using a trained feature extraction model based on SuperPoint, according to an embodiment of the disclosure. The image feature identifying module 802 may include a feature encoding unit, an interest point encoding unit, and a descriptor encoding unit.

The feature encoding unit is configured to encode the target image by an encoder to obtain encoded feature.

The interest point encoding unit is configured to input the encoded feature into an interest point encoder to obtain the feature point information of the target image.

The descriptor encoding unit is configured to input the encoded feature into a descriptor encoder to obtain the descriptor information of the target image.

Optionally, the positioning result generating module 704 is further configured to generate the current positioning result according to the matched frame image and pose information of the target image, according to an embodiment of the disclosure.

Therefore, the positioning system according to embodiments of the disclosure may be applied to a smart mobile terminal device configured with a camera, such as a cell phone, a tablet computer, etc. The positioning system can be directly applied to the mobile terminal device, and the positioning process does not require introducing other external base station devices, thus the positioning cost is low. In addition, there is no need to introduce algorithms with high error rate such as object recognition in the positioning process, the positioning has a high success rate and strong robust.

It should be understood that the above mentioned and other operations and/or functions of each unit in the positioning system 70 are configured to implement the corresponding process in the method according to FIG. 3 or FIG. 4 respectively, which will not be repeated here again, for simple and concise description.

The map constructing methods according to the embodiments of the disclosure are described specifically in the above, a map constructing apparatus according to the embodiments of the disclosure will be described below with reference to drawings. The technical features described in the method embodiments are applicable to the following apparatus embodiments.

FIG. 8 illustrate a schematic block diagram of a map constructing apparatus 80 according to an embodiment of the disclosure. As illustrated in FIG. 8, the map constructing apparatus 80 includes an environment image acquiring module 801, an image feature identifying module 802, a three-dimensional feature information generating module 803, and a map constructing module 804.

The environment image acquiring module 801 is configured to acquire a series of environment images of a current environment.

The image feature identifying module 802 is configured to obtain first image feature information of the environment images, and perform, based on the first image feature information, a feature point matching on the successive environment images to select keyframe images; where the first image feature information includes feature point information and descriptor information.

The three-dimensional feature information generating module 803 is configured to acquire depth information of matched feature points in the keyframe images, thereby constructing three-dimensional feature information of the keyframe images.

The map constructing module 804 is configured to construct map data of the current environment based on the keyframe images; where the map data includes the first image feature information and the three-dimensional feature information of the keyframe images.

Optionally, the map constructing apparatus 80 may further include an image feature information obtaining module, according to an embodiment of the disclosure.

The image feature information obtaining module is configured to perform a feature extraction on the keyframe images based on a trained bag-of-words model to obtain second image feature information, thereby constructing the map data based on the first image feature information, the three-dimensional feature information and the second image feature information of the keyframe images

Optionally, the environment image acquiring module may further a capture performing unit, according to an embodiment of the disclosure.

The capture performing unit is configured to capture the series of environment images of the current environment sequentially at a predetermined frequency by a monocular camera.

Optionally, the image feature identifying module is configured to obtain the first image feature information of the environment images by using a trained feature extraction model based on SuperPoint, according to an embodiment of the disclosure. The image feature identifying module may include an encoder processing unit, an interest point encoder processing unit, and a descriptor encoder processing unit.

The encoder processing unit is configured to encode the environment images to obtain encoded features by an encoder.

The interest point encoder processing unit is configured to input the encoded features into an interest point encoder to obtain the feature point information of the environment images.

The descriptor encoder processing unit is configured to input the encoded features into a descriptor encoder to obtain the descriptor information of the environment images.

Optionally, the map constructing apparatus 80 may further include a feature extraction model training module, according to an embodiment of the disclosure.

The feature extraction model training module is configured to construct a synthetic database, and train a feature point extraction model using the synthetic database; perform a random homographic transformation on original images in a MS-COCO dataset to obtain warped images each corresponding to the original images respectively, and perform a feature extraction on the warped images by a trained MagicPoint model, thereby acquiring feature point ground truth labels of each of the original images; take the original images in the MS-COCO dataset and the feature point ground truth labels of each of the original images as training data, and train a SuperPoint model to obtain the feature extraction model based on SuperPoint.

Optionally, the image feature information identifying module may include a unit for selecting environment image waiting to be matched, a feature point matching unit, and a circulating unit, according to an embodiment of the disclosure.

The unit for selecting environment image waiting to be matched is configured to take the first frame of the environment images as a current keyframe image, and select one or more frames from the environment images which are successive to the current keyframe image as one or more environment images waiting to be matched.

The feature point matching unit is configured to perform the feature point matching between the current keyframe image and the one or more environment images waiting to be matched by using the descriptor information, and select the environment image waiting to be matched whose matching result is greater than a predetermined threshold value as the keyframe image.

The circulating unit is configured to update the current keyframe image with the selected keyframe image, and select one or more frames from the environment images which are successive to the updated current keyframe image as one or more environment images waiting to be matched nextly; and perform the feature point matching between the updated current keyframe image and the one or more environment images waiting to be matched nextly by using the descriptor information, thereby successively selecting the keyframe images

Optionally, the three-dimensional feature information generating module may include a matching feature point pairs determining unit and a depth information calculating unit, according to an embodiment of the disclosure.

The matching feature point pairs determining unit is configured to established matched feature point pairs, by using the matched feature points in the current keyframe image and the keyframe image matched with the current keyframe image.

The depth information calculating unit is configured to calculate the depth information of the matched feature points in the matched feature point pairs, thereby constructing the three-dimensional feature information of the keyframe images by using the depth information of the feature points and the feature point information.

Optionally, the circulating unit is configured to perform the feature point matching, with a fixed number of feature points, between the current keyframe image and the one or more environment images waiting to be matched by using the descriptor information, according to an embodiment of the disclosure.

Optionally, the circulating unit is configured to perform the feature point matching, with a predetermined number of feature points based on an object contained in the current keyframe image, between the current keyframe image and the one or more environment image waiting to be matched by using the descriptor information, according to an embodiment of the disclosure.

Optionally, the circulating unit is configured to filter the matching result to remove incorrect matching therefrom, after obtaining the matching result between the current keyframe image and the one or more environment images waiting to be matched, according to an embodiment of the disclosure.

Optionally, the map constructing module is configured to serialize and store the keyframe images, the feature point information of the keyframe images, the descriptor information of the keyframe images, and the three-dimensional feature information of the keyframe images, thereby generating the map data in offline form.

It should be understood that the above mentioned and other operations and/or functions of each unit in the map constructing apparatus 80 are configured to implement the corresponding process in the method according to FIG. 1 respectively, which will not be repeated here again, for simple and concise description.

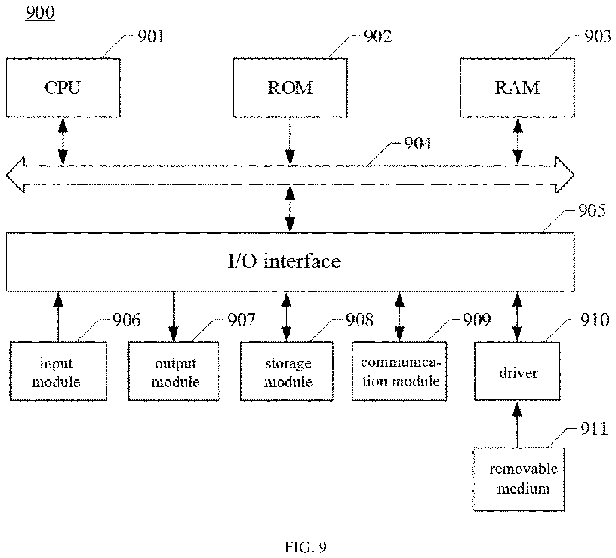

FIG. 9 illustrates a computer system 900 according to an embodiment of the disclosure, which is configured to implement a wireless communication terminal according to an embodiment of the disclosure. The wireless communication terminal may be a smart mobile terminal configured with a camera, such as a cell phone, a tablet computer, etc.

As shown in FIG. 9, the computer system 900 includes a central processing unit (CPU) 901, which may perform various actions and processing based on a program stored in a read-only memory (ROM) 909 or a program loaded from a storage module 908 into a random access memory (RAM) 903. The RAM 903 further stores various programs and data necessary for system operations. The CPU 901, the ROM 909, and the RAM 903 are connected to each other by using a bus 904. An input/output (I/O) interface 905 is also connected to the bus 904.

The following components are connected to the I/O interface 905: an input module 906 including a keyboard, a mouse, or the like, an output module 907 including a cathode ray tube (CRT), a liquid crystal display (LCD), a speaker, or the like, the storage module 908 including a hard disk or the like, and a communication module 909 including a network interface card such as a local area network (LAN) card or a modem. The communication module 909 performs communication processing via a network such as the Internet. A driver 910 is also connected to the I/O interface 905 as required. A removable medium 911, such as a magnetic disk, an optical disc, a magneto-optical disk, or a semiconductor memory, is installed on the driver 910 as required, so that a computer program read therefrom is installed into the storage module 908 as required.

Particularly, according to the embodiments of the disclosure, the processes described in the following with reference to the flowcharts may be implemented as computer software programs. For example, the embodiments of the disclosure include a computer program product, including a computer program carried on a computer-readable storage medium. The computer program includes program code for performing the methods shown in the flowcharts. In such an embodiment, the computer program may be downloaded from a network via the communication module 909 and installed, or installed from the removable medium 911. When the computer program is executed by the CPU 901, various functions described in the method and/or apparatus of this disclosure are executed.

It should be noted that, the computer-readable storage medium shown in the disclosure may be a computer-readable signal medium, a computer-readable storage medium, or any combination thereof. The computer-readable storage medium may include, but is not limited to, for example, an electrical, magnetic, optical, electromagnetic, infrared, or semiconductor system, apparatus, or device, or any combination thereof. A more specific example of the computer-readable storage medium may include, but is not limited to: an electrical connection with one or more wires, a portable computer disk, a hard disk, a RAM, a ROM, an erasable programmable read-only memory (EPROM or a flash memory), an optical fiber, a portable compact disc read-only memory (CD-ROM), an optical storage device, a magnetic storage device, or any suitable combination thereof. In the disclosure, the computer-readable storage medium may be any tangible medium including or storing a program, and the program may be used by or in combination with an instruction execution system, apparatus, or device. In the disclosure, the computer-readable signal medium may be a data signal included in a baseband or propagated as a part of a carrier, in which computer-readable program code is carried. The propagated data signal may be in a plurality of forms, including but not limited to, an electromagnetic signal, an optical signal, or any suitable combination thereof. The computer-readable signal medium may alternatively be any computer-readable storage medium other than the computer-readable storage medium. The computer-readable storage medium may send, propagate, or transmit a program for use by or in combination with an instruction execution system, apparatus, or device. The program code included in the computer-readable storage medium may be transmitted by using any appropriate medium, including but not limited to: a wireless medium, a wire, an optical cable, radio frequency (RF), or the like, or any suitable combination thereof.

The flowcharts and block diagrams in the accompanying drawings show architectures, functions, and operations that may be implemented for the method, the apparatus, and the computer program product according to the embodiments of the disclosure. In this regard, each box in the flowchart or the block diagram may represent a module, a program segment, or a part of code. The module, the program segment, or the part of code includes one or more executable instructions used for implementing specified logic functions. In some implementations used as substitutes, functions marked in boxes may alternatively occur in a sequence different from that marked in an accompanying drawing. For example, two boxes shown in succession may actually be performed basically in parallel, and sometimes the two boxes may be performed in a reverse sequence. This is determined by a related function. Each box in a block diagram or a flowchart and a combination of boxes in the block diagram or the flowchart may be implemented by using a dedicated hardware-based system configured to perform a designated function or operation, or may be implemented by using a combination of dedicated hardware and a computer instruction.

Related modules and/or units and/or subunits described in the embodiments of the disclosure may be implemented in software, or hardware, or the combination thereof. The described units may alternatively be set in a processor. Names of the units do not constitute a limitation on the units in a specific case.

Therefore, the computer system 900 according to the embodiment of the disclosure can achieve precise positioning of a target scene, and timely display. The immersion of the user can be effectively deepened and the user experience is improved.

It should be noted that, this application further provides a non-transitory computer-readable storage medium according to another aspect. The non-transitory computer-readable storage medium may be included in the electronic device described in the foregoing embodiments, or may exist alone and is not disposed in the electronic device. The non-transitory computer-readable storage medium carries one or more programs, the one or more programs, when executed by the electronic device, causing the electronic device to implement the method described in the following embodiments. For example, the electronic device may implement steps shown in FIG. 1, FIG. 2, FIG. 3 or FIG. 4.

In addition, the above-mentioned drawings are merely schematic illustrations of the processing included in the method according to the exemplary embodiments of the disclosure, and are not intended for limitation. It can be readily understood that the processes illustrated in the above drawings do not indicate or limit the time sequence of these processes. In addition, it can be readily understood that these processes may be executed synchronously or asynchronously in multiple modules.

Those skilled in the art may realize that the unit and algorithm step of the examples described in combination with the embodiments disclosed herein can be implemented by electronic hardware, or a combination of computer software and electronic hardware. Whether these functions are executed by hardware or software depends on the specific application and design constraints of the technical solution. Professionals and technicians can use different methods for each specific application to implement the described functions, but such implementation shall not be considered as going beyond the scope of the present application.

Those skilled in the art can clearly understand that, for convenience and concise description, the specific working process of the above-described system, device, and unit can refer to the corresponding process in the foregoing method embodiment, which will not be repeated herein.

In several embodiments provided by present application, it shall be understood that the disclosed system, device, and method may be implemented in other ways. For example, the device embodiment described above is only illustrative. For example, the division of unit is only a logical function division, and there may be other division methods in actual implementation, for example, a plurality of units or components may be combined or may be integrated into another system, or some features may be ignored or not implemented. In addition, the displayed or discussed mutual coupling or direct coupling or communication connection may be indirect coupling or communication connection through some interfaces, devices or units, and may be in electrical, mechanical or other forms.

The units described as separate components may be or may not be physically separated, and the components displayed as units may be or may not be physical units, that is, they may be located in one place, or they may be distributed on a plurality of network units. Some or all of the units may be selected according to actual needs to achieve the objectives of the solutions of the embodiments.

In addition, the functional units in each embodiment of the present application may be integrated into one processing unit, or each unit may exist alone physically, or two or more units may be integrated into one unit.

If the function is implemented in the form of a software functional unit and sold or used as an independent product, it can be stored in a computer readable storage medium. Based on this understanding, the technical solution of the present application essentially or a part that contributes to the prior art or a part of the technical solution can be embodied in the form of a software product, and the computer software product is stored in a storage medium, and includes several instructions to cause a computer device (which may be a personal computer, a server, a network device or the like) to execute all or part of the steps of the methods described in the various embodiments of the present application. The above storage media includes a U disk, a mobile hard disk, a read-only memory (ROM), a random access memory (RAM), a magnetic disk, an optical disk and other media that can store program codes.

The above are only specific implementations of the present application, but the protection scope of the present application is not limited thereto. Any person skilled in the art can easily conceive of changes or substitutions within the technical scope disclosed in the present application, which shall fall within the protection scope of the present application. Therefore, the protection scope of the present application shall be subject to the protection scope of the claims.

**Claims**

1. A map constructing method, comprising:

acquiring a series of environment images of a current environment;
obtaining first image feature information of the environment images, and performing, based on the first image feature information, a feature point matching on the successive environment images to select keyframe images; wherein the first image feature information comprises feature point information and descriptor information;
acquiring depth information of matched feature points in the keyframe images, thereby constructing three-dimensional feature information of the keyframe images; and
constructing map data of the current environment based on the keyframe images; wherein the map data comprises the first image feature information and the three-dimensional feature information of the keyframe images.

2. The method as claimed in claim 1, further comprising:

after the keyframe images are selected,
performing a feature extraction on the keyframe images based on a trained bag-of-words model to obtain second image feature information, thereby constructing the map data based on the first image feature information, the three-dimensional feature information and the second image feature information of the keyframe images.

3. The method as claimed in claim 1, wherein the acquiring a series of environment images of a current environment comprises:
capturing, by a monocular camera, the series of environment images of the current environment sequentially at a predetermined frequency.

4. The method as claimed in claim 1, wherein the obtaining first image feature information of the environment images comprises:

obtaining the first image feature information of the environment images by using a trained feature extraction model based on SuperPoint;
wherein the obtaining the first image feature information of the environment images by using a trained feature extraction model based on SuperPoint comprises:

encoding, by an encoder, the environment images to obtain encoded features;
inputting the encoded features into an interest point encoder to obtain the feature point information of the environment images; and
inputting the encoded features into a descriptor encoder to obtain the descriptor information of the environment images.

5. The method as claimed in claim 4, further comprising:

performing a training to obtain the feature extraction model based on SuperPoint;
wherein the performing a training to obtain the feature extraction model based on SuperPoint comprises:

constructing a synthetic database, and training a feature point extraction model using the synthetic database;
performing a random homographic transformation on original images in a MS-COCO dataset to obtain warped images each corresponding to the original images respectively, and performing a feature extraction on the warped images by a trained MagicPoint model, thereby acquiring feature point ground truth labels of each of the original images; and
taking the original images in the MS-COCO dataset and the feature point ground truth labels of each of the original images as training data, and training a SuperPoint model to obtain the feature extraction model based on SuperPoint.

6. The method as claimed in claim 1 or claim 2, wherein the performing, based on the first image feature information, a feature point matching on the successive environment images to select keyframe images comprises:

taking the first frame of the environment images as a current keyframe image, and selecting one or more frames from the environment images which are successive to the current keyframe image as one or more environment images waiting to be matched;

performing the feature point matching between the current keyframe image and the one or more environment images waiting to be matched by using the descriptor information, and selecting the environment image waiting to be matched whose matching result is greater than a predetermined threshold value as the keyframe image;

updating the current keyframe image with the selected keyframe image, and selecting one or more frames from the environment images which are successive to the updated current keyframe image as one or more environment images waiting to be matched nextly; and

performing the feature point matching between the updated current keyframe image and the one or more environment images waiting to be matched nextly by using the descriptor information, thereby successively selecting the keyframe images.

7. The method as claimed in claim 6, wherein the acquiring depth information of matched feature points in the keyframe images, thereby constructing three-dimensional feature information of the keyframe images comprises:

establishing matched feature point pairs, by using the matched feature points in the current keyframe image and the keyframe image matched with the current keyframe image; and

calculating the depth information of the matched feature points in the matched feature point pairs, thereby constructing the three-dimensional feature information of the keyframe images by using the depth information of the feature points and the feature point information.

8. The method as claimed in claim 6, wherein the performing the feature point matching between the current keyframe image and the one or more environment images waiting to be matched by using the descriptor information comprises: performing the feature point matching, with a fixed number of feature points, between the current keyframe image and the one or more environment images waiting to be matched by using the descriptor information.

9. The method as claimed in claim 6, wherein performing the feature point matching between the current keyframe image and the one or more environment images waiting to be matched by using the descriptor information comprises: performing the feature point matching, with a predetermined number of feature points based on an object contained in the current keyframe image, between the current keyframe image and the one or more environment image waiting to be matched by using the descriptor information.

10. The method as claimed in claim 6, further comprising:
filtering the matching result to remove incorrect matching therefrom, after obtaining the matching result between the current keyframe image and the one or more environment images waiting to be matched.

11. The method as claimed in claim 1, wherein the constructing map data of the current environment based on the keyframe images comprises:
serializing and storing the keyframe images, the feature point information of the keyframe images, the descriptor information of the keyframe images, and the three-dimensional feature information of the keyframe images, thereby generating the map data in offline form.

12. A positioning method, comprising:

acquiring a target image, in response to a positioning command;

extracting image feature information of the target image; wherein the image feature information comprises feature point information of the target image and descriptor information of the target image;

matching the target image with each of keyframe images in map data to determine a matched frame image, according to the image feature information; and

generating a current positioning result corresponding to the target image, according to the matched frame image.

13. The method as claimed in claim 12, comprising:

after the target image is acquired,

the operation of extracting image feature information of the target image is executed by: performing, by using a trained bag-of-words model, a feature extraction on the target image to extract the image feature information of the target image; and

the operation of matching the target image with each of keyframe images in map data to determine a matched frame image is executed by: matching the target image with each of the keyframe images in the map data to determine the matched frame image, by using the image feature information.

14. The method as claimed in claim 13, wherein the matching the target image with each of the keyframe images in the map data to determine the matched frame image, according to the image feature information comprises:

calculating, based on the image feature information, a similarity between the target image and each of the keyframe images in the map data, and selecting the keyframe images whose similarities are larger than a first threshold value, thereby obtaining a to-be-matched frame set;
grouping the keyframe images in the to-be-matched frame set to obtain at least one image group, according to timestamp information and the similarities of the keyframe images in the to-be-matched frame set;
calculating a matching degree between the target image and the at least one image group, and determining the image group with the largest matching degree as a to-be-matched image group;
selecting the keyframe image with the largest similarity in the to-be-matched image group as a to-be-matched image, and comparing the similarity of the to-be-matched image with a second threshold value; and
determining the to-be-matched image as the matched frame image of the target image, in response to the similarity of the to-be-matched image being larger than the second threshold value; or
determining the matching as failed in response to the similarity of the to-be-matched image being less than the second threshold value.

15. The method as claimed in claim 13, further comprising:

after the matched frame image is determined,
performing a feature point matching between the target image and the matched frame image based on the image feature information, thereby obtaining target matched feature points; and
inputting three-dimensional feature information of the matched frame image and the target matched feature points into a trained PnP model, thereby obtaining pose information of the target image.

16. The method as claimed in claim 12, wherein the extracting image feature information of the target image comprises:

obtaining the image feature information of environment images by using a trained feature extraction model based on SuperPoint;
wherein the obtaining the image feature information of environment images by using a trained feature extraction model based on SuperPoint comprises:

encoding, by an encoder, the target image to obtain encoded feature;
inputting the encoded feature into an interest point encoder to obtain feature point information of the target image; and
inputting the encoded feature into a descriptor encoder to obtain descriptor information of the target image.

17. The method as claimed in claim 12, wherein the generating a current positioning result corresponding to the target image, according to the matched frame image, comprises:
generating the current positioning result according to the matched frame image and pose information of the target image.

18. A positioning system, comprising:

a positioning command responding module, configured to acquire a target image, in response to a positioning command;
an image feature identifying module, configured to extract image feature information of the target image; wherein the image feature information comprises feature point information of the target image and descriptor information of the target image;
a matching frame selecting module, configured to match the target image with each of keyframe images in map data to determine a matched frame image, according to the image feature information; and
a positioning result generating module, configured to generate a current positioning result corresponding to the target image, according to the matched frame image.

19. A computer readable storage medium, having program codes stored therein, wherein the program codes, when being executed by a processor, are configured to perform the map constructing method of any one of claims 1-11 or the positioning method of any one of claims 12-17.

**20.** A wireless communication terminal, wherein the wireless communication terminal comprising:

one or more processors; and
a storage device configured to store one or more programs which, when being executed by the one or more processors, cause the one or more processors to implement the map constructing method of any one of claims 1-11 or the positioning method of any one of claims 12-17.

a series of environment images of a current environment are acquired — S11

first image feature information of the environment images is acquired, and a feature point matching on the successive environment images to select keyframe images is performed, based on the first image feature information — S12

depth information of matched feature points in the keyframe images is acquired, thereby constructing three-dimensional feature information of the keyframe images — S13

map data of the current environment is constructed based on the keyframe images — S14

FIG. 1

a series of environment images of a current environment are acquired — S11

first image feature information of the environment images is acquired, and a feature point matching on the successive environment images to select keyframe images is performed, based on the first image feature information — S12

depth information of matched feature points in the keyframe images is acquired, thereby constructing three-dimensional feature information of the keyframe images — S13

a feature extraction is performed on the keyframe images to obtain second image feature information, based on a previously trained bag-of-words model — S13-2

map data of the current environment is constructed based on the keyframe images — S14

FIG. 2

a target image is acquired, in response to a positioning command — S31

first image feature information of the target image is extracted; where the first image feature information includes feature point information of the target image and descriptor information of the target image — S32-11

the target image is matched with each of keyframe images in a map data to determine a matched frame image, according to the first image feature information — S32-12

a current positioning result corresponding to the target image is generated, according to the matched frame image — S33

FIG. 3

a target image is acquired, in response to a positioning command — S31

a feature extraction is performed on the target image to extract the image feature information of the target image, by using a previously trained bag-of-words model — S32-21

the target image is matched with each of keyframe images in a map data to determine a matched frame image, according to the image feature information — S32-22

a current positioning result corresponding to the target image is generated, according to the matched frame image — S33

FIG. 4

FIG. 5

FIG. 6

―70

positioning system

| positioning command responding module | ― 701 |

| first image feature identifying module | ― 702 |

| matching frame selecting module | ― 703 |

| positioning result generating module | ― 704 |

FIG. 7

―80

map constructing apparatus

| environment image acquiring module | ― 801 |

| first image feature identifying module | ― 802 |

| three-dimensional feature information generating module | ― 803 |

| map constructing module | ― 804 |

FIG. 8

FIG. 9

## INTERNATIONAL SEARCH REPORT

| | International application No. |
|---|---|
| | **PCT/CN2020/124547** |

| A. | CLASSIFICATION OF SUBJECT MATTER |
|---|---|

G06T 7/73(2017.01)i

According to International Patent Classification (IPC) or to both national classification and IPC

| B. | FIELDS SEARCHED |
|---|---|

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS, CNTXT, VEN, EPTXT, WOTXT, USTXT, CNKI, 万方: 地图, 构建, 环境, 图像, 特征, 匹配, 关键帧, 特征点, 描述子, 深度, 三维, map, construct, environment, image, feature, match, key frame, feature point, descriptor, depth, three dimensional

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 110866953 A (GUANGDONG OPPO MOBILE TELECOMMUNICATIONS CORP., LTD.) 06 March 2020 (2020-03-06) entire document | 1-20 |
| X | CN 109816686 A (SHANDONG UNIVERSITY) 28 May 2019 (2019-05-28) description, paragraphs 51-130 | 1-11, 19-20 |
| X | CN 109583457 A (JINMEN BOQIAN INFORMATION TECHNOLOGY CO., LTD.) 05 April 2019 (2019-04-05) description, paragraphs 45-151 | 1-11, 19-20 |
| X | 康凯 (KANG, Kai). "基于机器视觉的移动机器人定位与三维地图重建方法研究 (Research on Localization and Mapping of Mobile Robot Based on Machine Vision)" 中国优秀硕士学位论文全文数据库 信息科技辑 *(Information Science and Technology, Chinese Master's Theses Full-Text Database)*, No. 2, 15 February 2018 (2018-02-15), ISSN: 1674-0246, pp. 13-51 | 1-11, 19-20 |
| X | CN 107677279 A (SHANGHAI SLAMTEC CO., LTD.) 09 February 2018 (2018-02-09) description, paragraphs 46-72 | 12–20 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 January 2021** | **02 February 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2020/124547**

**C.    DOCUMENTS CONSIDERED TO BE RELEVANT**

| Category* | Citation of document, with indication, where appropriate, of the relevant passages | Relevant to claim No. |
|---|---|---|
| X | CN 109658445 A (BEIJING KUANGSHI TECHNOLOGY CO., LTD.) 19 April 2019 (2019-04-19) description, paragraphs 41-174 | 12–20 |
| A | CN 109671120 A (NANJING HUAJIE IMI SOFTWARE TECH CO., LTD.) 23 April 2019 (2019-04-23) entire document | 1-20 |
| A | CN 109816769 A (UBTECH ROBOTICS CORP.) 28 May 2019 (2019-05-28) entire document | 1-20 |
| A | US 2018204338 A1 (OTSAW DIGITAL PTE LTD.) 19 July 2018 (2018-07-19) entire document | 1-20 |

Form PCT/ISA/210 (second sheet) (January 2015)

**INTERNATIONAL SEARCH REPORT**
**Information on patent family members**

International application No.

**PCT/CN2020/124547**

| Patent document cited in search report | | | Publication date (day/month/year) | Patent family member(s) | | | Publication date (day/month/year) |
|---|---|---|---|---|---|---|---|
| CN | 110866953 | A | 06 March 2020 | None | | | |
| CN | 109816686 | A | 28 May 2019 | None | | | |
| CN | 109583457 | A | 05 April 2019 | None | | | |
| CN | 107677279 | A | 09 February 2018 | CN | 107677279 | B | 24 April 2020 |
| | | | | WO | 2019062651 | A1 | 04 April 2019 |
| CN | 109658445 | A | 19 April 2019 | None | | | |
| CN | 109671120 | A | 23 April 2019 | None | | | |
| CN | 109816769 | A | 28 May 2019 | None | | | |
| US | 2018204338 | A1 | 19 July 2018 | US | 10096129 | B2 | 09 October 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911056898